Europäisches Patentamt

European Patent Office

Office européen des brevets

(11) Veröffentlichungsnummer: **0 169 960**

**A2**

(12) # EUROPÄISCHE PATENTANMELDUNG

(21) Anmeldenummer: 85100617.1

(22) Anmeldetag: 22.01.85

(51) Int. Cl.⁴: **B 60 S 1/02**
**B 60 J 3/04**

(30) Priorität: 28.07.84 DE 3427881

(43) Veröffentlichungstag der Anmeldung:
05.02.86 Patentblatt 86/6

(84) Benannte Vertragsstaaten:
DE FR GB IT SE

(71) Anmelder: **Griesel, Heinrich**
**Dr. Ronge-Weg 3**
**D-6430 Bad Hersfeld(DE)**

(72) Erfinder: **Griesel, Heinrich**
**Dr. Ronge-Weg 3**
**D-6430 Bad Hersfeld(DE)**

(54) **Kombinierte Niederschlagsabweiser-, Wasch- und Blendschutzanlage für Kraftfahrzeuge aller Art.**

(57) Jede der drei Teilanlagen kann mittels nur eines mit dem Motor (3) ein- und auskoppelbar verbundenem Drucklufterzeugers (1) wahlweise und unabhängig von den anderen Teilanlagen durch Hand- oder Fußbedienung betrieben werden.

Der Inhalt des in den Motorblock (3) integrierten Waschwasserbehälters (12) wird durch die Verbrennungsabgase des Motors erhitzt, sodaß auch während Kälteperioder sowohl erhitzte Druckluft für den Betrieb der Niederschlagsabweiseranlage als auch erhitztes Waschwasser für den Betrieb der Waschanlage zur Verfügung steht, ohne daß zusätzlicher Energiebedarf für das Erhitzen erforderlich ist.

Die Blendschutzanlage ist dadurch gekennzeichnet, daß die Druckluft eine in dem Zylinder (56) befindliche, die den Blendschutz bewirkende Substanz (15) mittels des Kolbens (16) in den Zwischenraum (18) befördert, der dadurch entsteht, daß die Klarsichtscheibe (25) auf der Innenseite der Windschutzscheibe (8) angebracht ist, während die Blendschutzusbstanz nach Beendigung des Blendschutzvorgangs und nach Entkoppelung des Drucklufterzeugers (1) infolge der Sogwirkung der Verbrennungsgase im Auspuffrohr (23) wieder in den Zylinder (5b) zurückbefördert wird.

EP 0 169 960 A2

./...

Kombinierte Niederschlagabweiser-, Wasch- und 0189960
schutzanlage für Kraftfahrzeuge aller Art

Die Erfindung bezieht sich auf eine Kombination von drei
oder mehr Teilanlagen, bei der jede Teilanlage durch nur
einen einzigen mit dem Kfz.-Motor ein- und auskoppelbar
verbundenem Druckluterzeuger wahlweise und unabhängig
von den anderen Teilanlagen mittels Hand- oder Fußbedienung betrieben werden kann.

Es sind wischerlose und auch mit den üblichen Scheibenwischeranlagen kombinierte Konstruktionen von Reinigungsvorrichtungen bekannt (z.B. Deutsche Offenlegungsschriften Nr. 23 38 597, Nr. 26 13 988) bei denen der Drucklufterzeuger fest mit dem Kfz.-Motor verbunden ist und
somit dauernd mitläuft auch dann, wenn er für keine der
Teilanlagen gebraucht wird.

In der Offenlegungsschrift Nr. 23 38 597 Seite 7 Absatz 3
wird zum Zwecke der Scheibenreinigung ein lediglich
durch den vorbeistreichenden Luftstrom erzeugter Unterdruck beschrieben, durch den das Waschwasser auf die
Windschutzscheibe gespritzt wird. Bei stark verschmutzter Windschutzscheibe, insbesondere nach langer Parkzeit,
ist dieser geringe Druck jedoch nicht ausreichend, eine
auf der Windschutzscheibe anhaftende ölverschmierte und
von Insektenresten durchsetzte Schmutzschicht zu lösen
bzw. bei jeder Wetterlage eine klarsichtfreie Windschutzscheibe zu gewährleisten.

In der gleichen Offenlegungsschrift wird ferner eine
Heizspirale im Zuleitungs- oder Verteilerrohr vorgeschlagen, die jedoch wegen des kurzen Einwirkungsweges für die
Erhitzung des Waschwassers nicht ausreicht und darüber
hinaus die Kfz.-Batterie stark belastet.

Der heute übliche meist aus Kunststoff bestehende Waschwasserbehälter muß wegen seines geringen Fassungsvermögens öfters und zwar manuell nachgefüllt werden. Das

Waschwasser kann nicht erhitzt werden.

Die Bedienung der üblichen Blendschutzklappen (meist gepolsterte Platten aus Kunststoff) die innen über der Windschutzscheibe für Fahrzeuglenker und Beifahrer angebracht
sind und von diesen von Hand herunter- und wieder hochgeklappt werden müssen, ist lästig, umständlich und vorallem
zeitraubend. Je nach der manuellen Geschicklichkeit des
Fahrzeuglenkers kann ein verzögerndes Instellungbringen
dieser Blendschutzkappen insbesondere bei plötzlicher
Blendung zu Verkehrsunfällen führen.
Erfindungsgemäß werden diese Nachteile dadurch beseitigt,
daß

a) es durch die in der Patentansprüchen beschriebene Erfindung möglich ist, über die Zweierkombination (Abweiseranlage und Waschanlage) hinaus weitere Teilanlagen
   z.B. eine Blendschutzanlage zu betreiben.

b) der Drucklufterzeuger durch einen Koppelungsmechanismus zur Inbetriebnahme eingekoppelt und ausgekoppelt
   werden kann, wenn er nicht benötigt wird, wodurch seine Lebensdauer erheblich verlängert wird.

c) die Beförderung des Waschwassers beim Betrieb der erfindungsgemäßen Waschanlage unter sehr hohem Druck auf
   die Windschutzscheibe erfolgt und nur so die schnelle
   und vor allem gründliche Reinigung ihrer Gesamtfläche
   sowohl im Sommer als auch im Winter garantiert ist.

d) anstelle der vorgeschlagenen in dem Zuleitungs- und/
   oder Verteilerrohr untergebrachten Heizspirale erfindungsgemäß ein Druckwasserbehälter größeren Volumens
   vorgesehen wird, der in den Motorblock integriert ist
   und in dem somit auch bei kalter Witterung ohne jeden
   zusätzlichen Energieaufwand -nämlich durch die heißen
   Verbrennungsabgase- erhitztes Waschwasser oder beim
   Betrieb der Niederschlagsabweiseranlage erhitzte Druckluft zur Verfügung steht.

e) zum Zwecke der automatisch-kontinuierlichen Nachfüllung des in den Motorblock intregierten Druckwasserbehälters das Regenwasser über die üblichen Auffang- und Abflussrinnen durch ein Überleitungsrohr in einen Sammelbehälter geleitet wird, von dem aus der Druckwasserbehälter bei Außerbetriebstellung des Drucklufterzeugers automatisch-kontinuierlich nachgefüllt wird.

f) zum Zwecke des Blendschutzes eine mittels Druckluft betriebene Blendschutzanlage vorgesehen wird. durch die innerhalb weniger Sekunden für Fahrzeuglenker und für alle anderen Insassen eine blendungsfreie Sicht durch die Gesamtfläche der Windschutzscheibe ermöglicht ist.

Im folgenden wird die Erfindung anhand von lediglich einer Ausführungsweg darstellender Zeichnung näher erläutert:

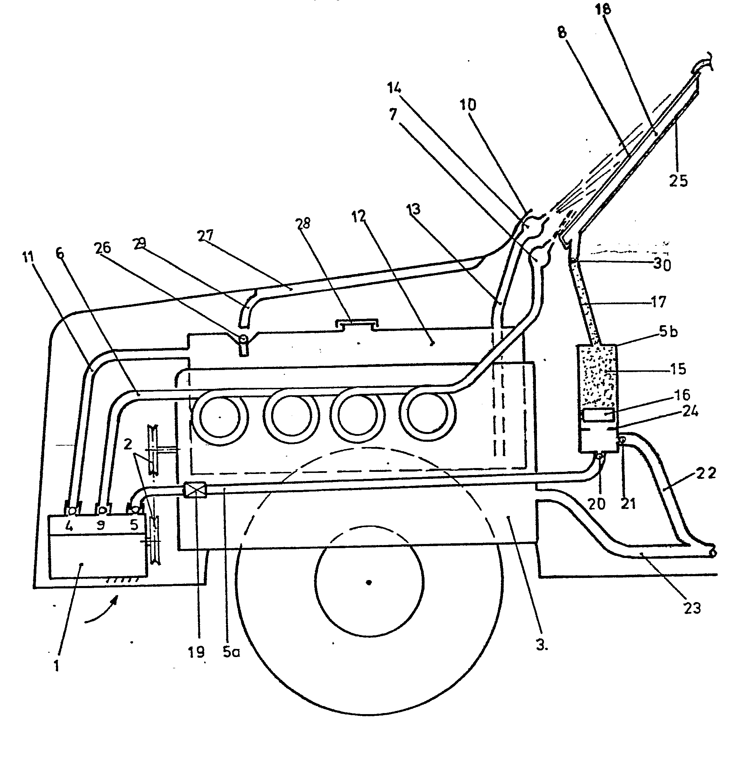

Die Zeichnung zeigt in schematischer Wiedergabe den Drucklufterzeuger 1, der durch Keilriemenantrieb 2 mit dem Kfz,-Motor 3 in der Weise verbunden ist, daß er bei Außerbetriebstellung aller Teilanlagen ausgekoppelt und bei Wiederinbetriebnahme einer Teilanlage eingekoppelt werden kann.

Der Drucklufterzeuger 1 besitzt einen Aufsatz mit der drei Luftdruckaustrittsöffnungen 4,9,5, die jeweils mit einer Drossel- oder Verschlußklappe in der Weise versehen sind, daß über einen Schaltmechanismus jeweils nur e i n e geöffnet werden kann, während die beiden anderen jeweils geschlossen bleiben.

Von der Luftdruckaustrittsöffnung 9 führt die Druckluftleitung 6 zunächst in den Druckwasserbehälter 12, bildet hier eine Spirale und führt weiter zum Verteilerrohr 7, das in den unteren Rahmenteil der Windschutzscheibe 8 integriert ist. Im Verteilerrohr 7 sind in bestimmte Richtung weisende Düsen und/oder Schlitze vorgesehen, aus denen der erhitzte Luftstrom unter hohem Druck über die

- 4 -

0169960

Gesamtfläche der Windschutzscheibe ein permanentes Luftpolster bildet, das, unterstützt durch den vom Leitblech
10 abgeleiteten Fahrtwind die Windschutzscheibe 8 in ihrer
Gesamtfläche vom Niederschlag freihält und diesen über
das Wagendach abweist, bevor er auf die Windschutzscheibe 8 auftreten kann.

Von der Luftdruckaustrittsöffnung 4 führt die Druckluftleitung 11 zunächst in den Druckwasserbehälter 12; über
das Steigrohr 13 führt sie in das Verteilerrohr 14, das
mit dem Verteilerrohr 7 parallel verläuft und in seiner
Gesamtlänge mit Düsen und/oder Schlitzen jedoch versetzt
in der Weise versehen ist, daß das erhitzte Waschwasser
aus dem Waschwasserbehälter 12 mit hohem Druck auf die
Gesamtfläche der Windschutzscheibe 8 schmutzlösend versprüht wird, wodurch die Klarsichtigkeit der Windschutzscheibe 8 innerhalb weniger Augenblicke gesamtflächig
im Sommer und Winter garantiert ist. Nach dem Waschvorgang wird auf die Niederschlagsabweiseranlage 9,6,7 umgeschaltet und somit die Gesamtfläche der Windschutzscheibe
8 wieder frei- und trockengeblasen.

Von der Druckluftaustrittsöffnung 5 führt die Druckluftleitung 5a in den Zylinder 5b. In der Druckluftleitung
5a ist ein Druckminderungsventil 19 vorgesehen, weil für
den Betrieb der Blendschutzanlage nur ein geringerer
Druck notwendig ist. Nach Schaltung der Blendschutzanlage
drückt der Kolben 16 die im Zylinder 5b befindliche, aus
gefärbten Kleinstkristallen bestehende, die den Blendschutz erzeugende Substanz 15, bei geöffnetem Ventil 20
und dem geschlossenen Ventil 21 in den Zwischenraum 18.
Dieser entsteht dadurch, daß eine Klarsichtscheibe 25
aus Kunststoff oder dergl. mit ihrer rundum gekröpften
Randfläche von innen auf die Windschutzscheibe 8 in der Weise angebracht ist, daß ein Abstand von einigen Millimetern
zwischen den beiden Scheiben entsteht. Nach Beendigung des
Blendschutzvorgangs wird der Drucklufterzeuger 1 vom Motor 3 entkoppelt, dabei schließt sich das Ventil 20. Infolge

- 5 -                                              **0169960**

der dadurch entstehenden Sogwirkung in der Auspuffleitung
23 öffnet sich über das Ableitungsrohr 22 das Ventil 21,
gleichzeitig wird der Kolben 16 bis zum Anschlag 24 zurückgeführt und somit die im Zwischenraum 18 befindliche
Blendschutzsubstanz 15 wieder in den Zylinder 5b zurückbefördert.

Der Druckwasserbehälter 12 besitzt zur manuellen Nachfüllung den mit dem Bajonettverschluß 28 versehenen Füllstutzen. Um jedoch ein kontinuierlich-automatisches Nachfüllen des Druckwasserbehälters 12 zu ermöglichen, wird der
auf Motorhaube und Kotflügel auftreffende Niederschlag,
der bisher über die üblichen Auffang- und Abflußrinnen
27 zum Erdboden abgelenkt wurde, über das Abflußrohr 29
in einen Regenwasser-Sammelbehälter (nicht eingezeichnet)
eingeleitet, dessen äußere Form dem verbliebenem Freiraum unter der Motorhaube angepaßt werden kann. Nach Entkoppelung des Drucklufterzeugers 1 vom Motor 3 läuft der
Inhalt des Regenauffangbehälters (nicht eingezeichnet) infolge des natürlichen Gefälles bei geöffnetem Ventil 26
in den Druckwasserbehälter 12. Bei Inbetriebnahme des
Drucklufterzeugers 1 schließt sich Ventil 26.

Patentansprüche

1. Kombinierte Niederschlagsabweiser-,Wasch- und Blendschutzanlage für Kraftfahrzeuge aller Art, dadurch gekennzeichnet, daß jede der drei Teilanlagen durch nur  e i n e n  mit dem Kfz.-Motor(3)ein- und entkoppelbaren Drucklufterzeuger (1) mit oder ohne Windkessel wahlweise und getrennt mittels Hand- oder Fußbedienung betrieben werden kann und weitere Teilanlagen für andere Zwecke unter der gleichen Voraussetzung vorgesehen werden können.

2. Kombinierte Anlage nach Patentanspruch 1 dadurch gekennzeichnet, daß der Drucklufterzeuger (1) mit zwei oder mehr Druckluftaustrittsöffnungen (4,9,5)versehen ist, von denen jeweils nur eine über einen vom Fahrzeuglenker gesteuerten Schaltmechanismus freigegeben werden kann, während die anderen automatisch blockiert bleiben.

3. Kombinierte Anlage nach Patentanspruch 1 dadurch gekennzeichnet, daß bei Verwendung eines Drucklufterzeugers (1) mit nur  e i n e r  Druckluftaustrittsöffnung ein vom Fahrzeuglenker steuerbarer Schaltmechanismus  z w i s c h e n  Drucklufterzeuger (1) und den Teilanlagen in der Weise vorgesehen ist, daß die Druckluft jeweils nur zu einer der Teilanlagen geleitet werden kann, während die Druckluftleitungen zu den anderen Teilanlagen automatisch blockiert bleiben.

4. Kombinierte Anlage nach Patentanspruch 1 dadurch gekennzeichnet, daß das mit Düsen und/oder Schlitzen versehene Verteilerrohr (7) wahlweise sowohl für den Betrieb der Niederschlagsabweiseranlage als auch für den Betrieb der Waschanlage vorgesehen werden kann.

5. kombinierte Anlage nach Patentanspruch 1 dadurch gekennzeichnet, daß sowohl für die Niederschlagsabweiseranlage als auch für die Waschanlage je ein eigenes Zuleitungs- (6,11) und Verteilerrohr (7,14) vorgesehen ist.

6. kombinierte Anlage nach Anspruch 1 dadurch gekennzeichnet, daß das Verteilerrohr (7) in den unteren waagrechten Rahmenteil der Windschutzscheibe (8) integriert ist.

7. Kombinierte Anlage nach den Patentansprüchen 1,4,5, 6 dadurch gekennzeichnet, daß die Düsen und Schlitze der Verteilerrohre (7,14) zur Verhinderung ihrer Verschmutzung, während ihrer Außerbetriebstellung mit einer oder mehreren Verschlußklappen versehen sind, die sich durch den Druck oder Sog des Fahrtwindes und/oder durch einen Federmechanismus automatisch schließen.

8. Kombinierte Anlage nach den Patentansprüchen 1,2,3 dadurch gekennzeichnet, daß sowohl die Niederschlagsabweiseranlage als auch die Waschanlage zum Zwecke der Niederschlagsabweisung und Reinigung der übrigen Kfz.-Verglasungsflächen insbesondere der Scheinwerfergläser eingesetzt werden können.

9. Kombinierte Anlage nach Patentanspruch 1 dadurch gekennzeichnet, daß der Druckwasserbehälter (12) in den Motorblock (3) in der Weise intregiert ist, daß infolge der heißen Verbrennungsabgase auch während der Kälteperioden für den Betrieb der Niederschlagsabweiseranlage (9,6,12,7) erhitzte Druckluft und für den Betrieb der Waschanlage (4,11,12,13,14) erhitztes Waschwasser zur Verfügung steht.

10. Blendschutzanlage nach Patentanspruch 1 dadurch gekennzeichnet, daß eine aus Kunststoff oder Glas oder dergleichen gefertigte Klarsichtscheibe (25) ganz oder teilflächig auf die Innen- oder Außenseite der Windschutzscheibe (8) im Abstand von weniger Millimetern aufgeschweißt oder auf andere Weise so angebracht wird, daß ein Zwischenraum (18) entsteht, der durch eine mit Ein- und Auslaßventil (30) versehene Druckluftzu- und ableitung (17) mit einem Zylinder (5b) verbunden ist, der die den Blendschutz erzeugende Substanz (15) enthält.

11. Blendschutzanlage nach den Patentansprüchen 1,10 dadurch gekennzeichnet, daß bei ihrer Inbetriebnahme die im Zylinder (5b) befindliche Blendschutzsubstanz (15) von der -durch das Druckminderungsventil (19) reduzierten- Druckluft mittels des Kolbens (16) über das Verbindungsrohr (17) in den Zwischenraum (18) befördert wird und daß ferner durch Entkoppelung des Drucklufterzeugers (1) und der dadurch erzeugten Sogwirkung der Verbrennungsabgase im Auspuffrohr (23) über das Ableitungsrohr (22) der Kolben (16) bis zum Anschlag (24) zurückgeführt und somit die Blendschutzsubstanz (15) wieder in den Zylinder (5b) zurückbefördert wird.

12. Blendschutzanlage nach den Patentansprüchen 1,10,11, dadurch gekennzeichnet, daß anstelle der Blendschutzsubstanz (15) eine aufblasbare, gefärbte Plastikblase im aufgeblasenen Zustand den Zwischenraum (18) ausfüllt und diese analog dem Entleerungsvorgang gemäß Anspruch 11 (23,22,16,17) wieder entleert wird.

13. Regenauffangbehälter aus Metall oder Kunststoff zur Waschanlage nach Patentanspruch 9 dadurch gekennzeichnet, daß er den auf Motorhaube und Kotflügel auftreffenden Niederschlag über die in der Karosserie befindlichen Abflußrinnen (27) über ein Zwischenrohr (29) aufnimmt und ihn nach Entkoppelung des Drucklufter-

zeugers (1) über ein Einlaßventil (26) automatisch-kontinuierlich in den Druckwasserbehälter (12) bis zu dessen Füllung befördert.

14. kombinierte Anlage nach Patentanspruch 1 dadurch gekennzeichnet, daß nur eine Zweierkombination bestehend aus -Niederschlagabweiser- und Waschanlage- vorgesehen werden kann.